# EUROPÄISCHE PATENTSCHRIFT

(11) **EP 3 673 210 B1**
(45) Veröffentlichungstag und Bekanntmachung des Hinweises auf die Patenterteilung: **26.10.2022**
(21) Anmeldenummer: 18746161.1
(22) Anmeldetag: 25.07.2018
(51) Int. Cl.: F24C 15/00, F24C 15/32

(54) **DAMPFGARGERÄT**
STEAM COOKING DEVICE
APPAREIL DE CUISSON À VAPEUR

(30) Priorität: 25.08.2017 DE 102017214928
(43) Veröffentlichungstag der Anmeldung: 01.07.2020
(73) Patentinhaber: BSH Hausgeräte GmbH, 81739 München (DE)
(72) Erfinder: BALL, Ludovic, 67770 Sessenheim (FR); FREY, Sebastian, 75203 Königsbach-Stein (DE); HINTERMAYER, Manfred, 76185 Karlsruhe (DE)
(86) Internationale Anmeldenummer: PCT/EP2018/070109
(87) Internationale Veröffentlichungsnummer: WO 2019/038006

(56) Entgegenhaltungen:
- EP-A1- 1 192 888
- EP-A1- 2 550 902

## Beschreibung

Die Erfindung betrifft ein Dampfgargerät mit einer Wasserversorgungseinheit, die einen entnahmbaren Wassertank aufweist, der in Einbaulage eine einem Benutzer zugewandte Vorderseite und eine der Vorderseite gegenüberliegende Rückseite und ein Verschlusselement zum Verschließen seiner Befüllöffnung aufweist, und einer mit der Wasserversorgungseinheit verbindbaren Verdampfereinheit, mit welcher Wasser der Wasserversorgungseinheit verdampfbar ist und der in der Verdampfereinheit erzeugte Dampf in den Garraum des Dampfgargeräts bereitstellbar ist.

### Stand der Technik

Es sind Backöfen bekannt, die auch die Möglichkeit bieten, Gargut durch Dampferzeugung im Garraum zuzubereiten. Dabei werden während der Zubereitung Dampfstöße erzeugt, die in den Garraum geleitet werden bzw. erst darin erzeugt werden. Dazu ist ein Behälter zur Bevorratung von Wasser erforderlich. Dieser kann bei bekannten Geräten im Bereich der Bedienblende des Backofens angeordnet sein und daraus entnommen werden. Dabei kann bei herkömmlichen Ausgestaltungen die Entnahme relativ aufwändig und unhandlich sein. Weiterhin gestaltet sich oftmals die Befüllung des Wassertanks schwierig.

Die EP 2 463 585 A1 offenbart beispielsweise einen Wassertank für ein Dampfgargerät, mit einem Behälter zur Aufnahme des Wassers, wobei an dem Behälter eine frontseitige Abdeckung als Blende angeordnet ist, welche relativ zum Behälter bewegbar angeordnet ist. Die EP 1 192 888 A1 offenbart ebenfalls ein Dampfgargerät mit einem herausziehbaren Wassertank.

Die Beschreibung des Standes der Technik ist vorgesehen, um das Verständnis des Hintergrundes der vorliegenden Erfindung zu fördern, und kann Gegenstände außerhalb des Standes der Technik umfassen, der einem Durchschnittsfachmann bekannt ist.

### Der Erfindung zugrundeliegende Aufgabe

Es ist eine Aufgabe der vorliegenden Erfindung, ein gegenüber dem Stand der Technik verbessertes Dampfgargerät bereitzustellen, dass die oben beschriebenen Nachteile beseitigt, während die aus dem Stand der Technik erzielten Vorteile beibehalten werden.

### Erfindungsgemäße Lösung

Die Lösung der gestellten Aufgabe gelingt durch ein Dampfgargerät mit den Merkmalen des Anspruchs 1. Erfindungsgemäß kann dies bei einem Dampfgargerät nach dem Oberbegriff des Anspruchs 1 dadurch erreicht werden, dass der Wassertank ein Verschlusselement zum Verschließen seiner Befüllöffnung zum Befüllen mit Wasser aufweist, wobei das Verschlusselement zumindest abschnittsweise die Vorderseite oder die Rückseite des Wassertanks bildet. Unter einem Dampfgargerät soll jegliches Haushaltsgerät verstanden werden, welches in einen Garraum eingebrachtes Gargut mittels Wasserdampf gart und/oder ein Gargutergebnis verbessert. Es versteht sich, dass das Dampfgargerät sowohl ein Gargerät, beispielsweise ein Backofen, mit einer Dampffunktion, bei dem neben dem erzeugten Wasserdampf noch weitere Wärmequellen in Form von zum Beispiel Heizkörpern vorhanden sind, als auch ein Dampfgargerät, das ausschließlich Wasserdampf zum Erhitzen/Garen von Gargut verwendet, sein kann.

Die Wasserversorgungseinheit kann neben dem oben erwähnten Wassertank auch weitere Komponenten aufweisen, die für die Versorgung einer Verdampfereinheit mit Wasser erforderlich sein können. Dazu zählen beispielsweise eine Wasserzuführungseinheit, die den Wassertank mit der Verdampfereinheit verbindet, sowie alle Arten von Leitungen und/oder Leitungssystemen sowie Anschluss- und/oder Verbindungselemente. Die Wasserzuführungseinheit weist an einem ersten Endabschnitt Mittel zur Kopplung mit dem Wassertank und an einem zweiten Endabschnitt Mittel zur Kopplung mit der Verdampfereinheit auf. Insbesondere ist die Wasserversorgungseinheit derart eingerichtet, dass sie einen Wasserkreislauf nach dem Prinzip der Vogeltränke ermöglicht. Dieses Vogeltränke-Prinzip ist dem Fachmann gut bekannt, weshalb eine ausführliche Beschreibung desselben weggelassen werden kann.

Unter Einbaulage des Wassertanks soll die Lage verstanden werden, in welcher der Wassertank in dem Dampfgargerät, beispielsweise in einer dafür vorgesehenen Halterung, aufgenommen und insbesondere betriebsbereit ist. Infolgedessen bildet die einem Benutzer zugewandte Vorderseite des Wassertanks einen sichtbaren Teil einer Bedienblende. Die Vorderseite ist an einem ersten Endabschnitt des Wassertanks gebildet und die Rückseite des Wassertanks ist an einem dem ersten Endabschnitt gegenüberliegenden Endabschnitt gebildet.

Das in dem Wassertank bevorratete Wasser kann im Betrieb an eine im Dampfgargerät angeordnete Verdampfereinheit zugeführt werden. Mittels der Verdampfereinheit kann Dampf erzeugt und in den Garraum des Dampfgargeräts bereitgestellt werden. Die Funktion einer Verdampfereinheit ist dem Fachmann gut bekannt, weshalb eine ausführliche Beschreibung derselben weggelassen werden kann.

Das Verschlusselement verschließt eine Befüllöffnung des Wassertanks zum Befüllen mit Wasser, insbesondere durch einen Wasserhahn, und insbesondere derart, dass bei Einbaulage des Wassertanks kein Wasser mehr austreten kann. Dadurch, dass das Verschlusselement zumindest abschnittsweise die Vorderseite oder die Rückseite des Wassertanks bildet, lässt sich ein positives Erscheinungsbild des Dampfgargeräts realisieren, da sich die jeweilige Seite des Wassertanks vorteilhaft in das Design des Geräts integrieren lässt, ohne Einbußen bezüglich des Benutzerkomforts beim Entnehmen/Befüllen des Wassertanks hinnehmen zu müssen. Das heißt, aus Designsicht ist nahezu die vollständige Integration der Wasserversorgungseinheit beziehungsweise des Wassertanks in einen Blendenträger bzw. eine Bedienblende des Dampfgargeräts möglich.

Aus Designsicht und aus Gründen der Reinigung ist es dabei besonders wünschenswert, dass die Vorderseite oder die Rückseite des Wassertanks mit der Frontfläche der Bedienblende im Wesentlichen bündig ist. Das heißt, die Vorder- oder Rückseite des Wassertanks ist in Einbaulage desselben derart in die Bedienblende integriert, dass keine störenden Komponenten vorhanden sind, welche in Bezug auf eine Frontfläche der Bedienblende in Richtung eines Benutzers hervorragen oder zurückversetzt angeordnet sind. Dadurch lässt sich in vorteilhafter Weise ein homogenes Erscheinungsbild realisieren. Das Verschlusselement beziehungsweise die Vorderseite des Verschlusselements ist grifflos und ist insbesondere eben ausgebildet, so dass sich eine gute Integration in die Bedienblende realisieren lässt.

Erfindungsgemäß ist es vorgesehen, dass das Verschlusselement zumindest abschnittsweise die Vorderseite oder die Rückseite des Wassertanks bildet. Darunter soll verstanden werden, dass die einem Benutzer des Dampfgargeräts zugewandte Frontfläche des Verschlusselements zumindest einen Teil der Vorder- oder Rückseite bildet. Somit wäre es auch denkbar, dass die Frontfläche des Verschlusselements ein Flächenmaß aufweist, das kleiner als das Flächenmaß der Querschnittsfläche des Wassertanks ist, wobei die Frontfläche und die Querschnittsfläche im Wesentlichen parallel zueinander sind. Es ist jedoch ebenso vorstellbar, dass die Frontfläche ein Flächenmaß aufweist, das größer als das der Querschnittsfläche ist. Dies könnte insbesondere dann vorteilhaft sein, wenn ein Durchmesser des Wassertanks beziehungsweise dessen Querschnittsfläche kleiner als der Durchmesser beziehungsweise die Querschnittsfläche des in die Bedienblende des Dampfgargeräts zu integrierenden Verschlusselements ist. Somit ließe sich ein Wassertank in die Bedienblende integrieren, dessen Verschlusselement beispielsweise die gleiche Optik und/oder Größe und/oder Form wie ein daneben angeordneter Bedienknebel des Dampfgargeräts aufweist.

Erfindungsgemäß ist es vorgesehen, dass das Verschlusselement die Vorderseite oder die Rückseite des Wassertanks bilden kann. Bildet das Verschlusselement zumindest abschnittsweise die Vorderseite des Wassertanks, dann ist die Frontfläche des Verschlusselements in Einbaulage des Wassertanks dem Benutzer zugewandt. Im Gegensatz dazu, wenn das Verschlusselement zumindest abschnittsweise die Rückseite des Wassertanks bildet, ist die Frontfläche des Verschlusselements dem Benutzer abgewandt und somit für den Benutzer nicht sichtbar. Somit würde der vor dem Dampfgargerät stehende Benutzer lediglich den Boden bzw. Bodenbereich sehen können, wohingegen die durch das Verschlusselement gebildete Rückseite des Wassertanks im Gerät verdeckt liegt. Es versteht sich für den Durchschnittsfachmann, dass im letzteren Fall in dem Verschlusselement Mittel/Komponenten vorgesehen sein können, die zum Verbinden/Koppeln mit der Wasserversorgungseinheit eingerichtet sind. Somit besteht der Unterschied zwischen den beiden beschriebenen Varianten lediglich darin, dass die Anbringung des Verschlusselements seitenvertauscht ist. Die Befüllöffnung des Wassertanks befindet sich insbesondere auf der gegenüberliegenden Seite einer Auslassöffnung desselben.

Vorteilhafte Aus- und Weiterbildungen, die einzeln oder in Kombination miteinander eingesetzt werden können, sind Gegenstand der abhängigen Ansprüche.

Gemäß einer Ausführungsform der Erfindung ist das Verschlusselement durch einen Bajonett- oder Schraubverschluss an einem Grundkörper des Wassertanks befestigbar. Dadurch lässt sich der Wassertank komfortabel und schnell verschließen.

Vorzugsweise weist ein Grundkörper des Wassertanks eine im Wesentlichen längliche, vorzugsweise zylindrische, weiter vorzugsweise kreiszylindrische, Bauform auf, weshalb das eingefüllte Wasser in diesem (Haupt-)Teil des Wassertanks bevorratet ist. Dies hätte den Vorteil, dass sich einerseits in Bezug auf neben dem Wassertank in/an der Bedienblende des Dampfgargeräts angeordnete Bedienknebel ein verbessertes optische Ergebnis als auch eine verbesserte Handhabung beim Befüllen des Wassertanks erzielen ließe. Das heißt, der vor dem Dampfgargerät stehende Benutzer würde zu dem Eindruck gelangen können, dass es sich bei dem eingeschobenen Wassertank, also in Einbaulage, optisch um einen Bedienknebel handelt. Es ist weiterhin bevorzugt, dass an dem im Wesentlichen transparenten Grundkörper des Wassertanks Markierungen über den Füllstand vorgesehen sind. Der Grundkörper kann in nicht einschränkender Weise aus Kunststoff hergestellt sein. Es versteht sich, dass der gesamte Wassertank aus Kunststoff hergestellt sein kann. Es ist jedoch auch vorstellbar, dass das Verschlusselement ein anderes Material als das des Grundkörpers aufweist. Das Verschlusselement ist an einem ersten Endabschnitt des Grundkörpers, beispielsweise durch eines der oben erwähnten Verschlussarten, anbringbar, wobei der Grundkörper an dem ersten Endabschnitt eine der Verschlussart entsprechende Ausgestaltung, beispielsweise ein Gewinde, Teil eines Bajonettverschlusses oder dergleichen, aufweist. An dem zweiten Endabschnitt des Grundkörpers, der dem ersten Endabschnitt gegenüberliegt, ist eine Auslassöffnung vorgesehen, in der eine Ventileinheit angebracht ist, die später beschrieben wird.

Zur besseren Abdichtung kann das Verschlusselement und/oder der Grundkörper an einem Verbindungsabschnitt eine Dichtung, insbesondere eine Gummidichtung, aufweisen. Dadurch kann eine verbesserte Dichtwirkung erzielt werden. Es kann beispielsweise vorgesehen sein, dass die Dichtung einen Außendurchmesser aufweist, der im Wesentlichen einem Innendurchmesser des Verschlusselements entspricht. Die Dichtung liegt dabei im Schließzustand des Verschlusselements im Wesentlichen an einem stirnseitigen Frontabschnitt des Grundkörpers oder seiner Außenmantelfläche an. Die Dichtung kann lose in das Verschlusselement eingelegt werden oder fest mit diesem verbunden sein. Bei einer einstückigen/integralen Ausbildung des Verschlusselements und der Dichtung könnte ein Verlust der losen Dichtung verhindert werden.

Vorzugsweise ist die Gummidichtung als 0-Ring ausgebildet, der in einer Schließstellung des Verschlusselements durch eine Feder gegen eine Dichtkante des Grundkörpers gedrückt ist. Somit kann eine nochmals verbesserte Dichtwirkung erzielt werden. Als Feder können in der gesamten Offenbarung in nicht einschränkender Weise jede Art von Feder, wie beispielsweise eine Schraubenfeder, Spiralfeder oder dergleichen, verwendet werden. Besonders bevorzugt ist es, dass der 0-Ring auf einem Dichtungsträger, insbesondere topfförmigen Dichtungsträger, angeordnet ist und dass die Feder zwischen einem Verschlussdeckel des Verschlusselements und dem Dichtungsträger angeordnet ist. Diese Anordnung weist den Vorteil auf, dass die Dichtung in Form des 0-Rings federkraftbeaufschlagt gegen die am Grundkörper gebildete Dichtkante gedrückt wird, weshalb die Dichtwirkung nochmals verstärkt wird. Darüber hinaus ist es vorgesehen, dass der Dichtungsträger derart ausgeführt ist, dass er, beispielsweise mittels einer Verrastung, an dem Verschlussdeckel angebracht ist. Hierdurch ließe sich ein Verschlusselement in Form einer kompakten Baueinheit herstellen, die den Verschlussdeckel, die Dichtung, den Dichtungsträger und die zwischen Dichtungsträger und Verschlussdeckel angeordnete Feder aufweist. in diesem Zusammenhang ist an dem Dichtungsträger eine umfangsseitige Nut/Vertiefung vorgesehen, an/in die der O-Ring anbringbar ist. Die Nut ist insbesondere an einem dem Grundkörper des Wassertanks zugewandten Endabschnitt angeordnet.

In einer weiteren Ausführungsform ist vorgesehen, dass das Verschlusselement eine Abdeckkappe aufweist, die zumindest abschnittsweise die Vorderseite des Wassertanks bildet. Hiermit kann eine spezielle Anpassung an das vorhandene Design des Dampfgargeräts erzielt werden. Dies betrifft insbesondere die Fälle, in denen verschiedene Blendenmaterialen, wie beispielsweise Glas, Metall oder dergleichen, verwendet werden. Darüber hinaus ist es durch eine in das Erscheinungsbild des Dampfgargeräts integrierte Abdeckkappe möglich, verschiedene Designlinien eines Hausgeräte-Herstellers abzudecken. Dabei ist es besonders bevorzugt, wenn das Verschlusselement beziehungsweise der Verschlussdeckel eine Schnittstelle/Anbindung aufweist, die der Schnittstelle/Anbindung des Bedienknebels entspricht. Im Falle der Anbringung der Abdeckkappe ist es ebenfalls vorgesehen, dass die Vorderseite des Wassertanks mit der Frontfläche der Bedienblende bündig ist.

Zur fluidtechnischen Kopplung mit der Verdampfereinheit weist der Wassertank zur Kopplung eine Ventileinheit auf. Diese Ventileinheit dient der fluidtechnischen Kopplung uns ist zum Befüllen mit Wasser geeignet. Die Kopplung erfolgt in der Regel mittels einer nach dem Vogeltränke-Prinzip arbeitenden Wasserzuführungseinheit, welche das Verbindungsglied zwischen dem Wassertank und der Verdampfereinheit darstellt. Die Ventileinheit weist in nicht einschränkender Weise ein Ventil beziehungsweise eine Ventilvorrichtung in Form eines Aufstoß-Ventils auf, das das im Wassertank bevorratete Wasser in Richtung der Verdampfereinheit ablaufen lässt, sobald die Ventileinheit mit einem Anschlusselement oder Andockstutzen einer Wasserzuführungseinheit gekoppelt oder verbunden ist. Die Ventileinheit ist in/an einer in dem Grundkörper des Wassertanks gebildeten Auslassöffnung vorgesehen. Die Wasserzuführungseinheit weist dabei in nicht einschränkender Weise ein Leitungssystem zum Zuführen des Wassers zu der Verdampfereinheit auf, wobei das Anschlusselement oder der Andockstutzen dann an dem Leitungssystem vorgesehen ist. Das Leitungssystem arbeitet wie eingangs erwähnt nach dem Vorgeltränke-Prinzip. Dabei öffnet sich die Ventileinheit erst im vollständig eingeschobenen Zustand des Wassertanks.

In einer weiteren Ausführungsform der vorliegenden Erfindung ist vorgesehen, dass die Wasserversorgungseinheit eine Aufnahmeeinheit zur Aufnahme des Wassertanks aufweist, wobei die Aufnahmeeinheit insbesondere an einem Blendenträger des Dampfgargeräts angebracht ist. Die Aufnahmeeinheit weist bevorzugt eine untere und eine obere Gehäuseschale auf und ist bevorzugt aus einem Kunststoff hergestellt. Es ist besonders vorteilhaft, wenn die Aufnahmeeinheit eine Schnittstelle/Anbindung aufweist, die der Schnittstelle/Anbindung eines ebenfalls an dem Blendenträger angeordneten Knebeltopfes entspricht. Dadurch wären Vorteile sowohl bei der Herstellung als auch bei der Montage erzielbar, da in dem Blendenträger für die Aufnahmeeinheit keine unterschiedlichen Öffnungen/Durchbrüche hergestellt werden müssen. Vorzugsweise kann, insbesondere an einer Außenseite der Aufnahmeeinheit, ein Mikroschalter angeordnet sein, durch welchen erfasst werden kann, ob der Wassertank vollständig gekoppelt ist. Beispielsweise könnte bei einer fehlerhaften, also unvollständigen Kopplung des Wassertanks durch den Mikroschalter an eine Steuerung des Dampfgargeräts ein Signal über die fehlerhafte Kopplung ausgegeben werden, so dass wiederum eine entsprechende Nachricht an einen Benutzer ausgegeben werden könnte.

Zur besseren Anpassung an den Wassertank kann es bevorzugt sein, dass die Aufnahmeeinheit eine im Wesentlichen längliche, vorzugsweise zylindrische, weiter vorzugsweise kreiszylindrische Bauform aufweist. Es versteht sich für einen Durchschnittsfachmann, dass im Falle einer durch eine obere und untere Gehäuseschale gebildeten Aufnahmeeinheit beide Gehäuseschalen beispielsweise jeweils die Form eines entsprechenden Halbzylinders aufweisen können. Darüber hinaus versteht es sich, dass sich die längliche, vorzugsweise zylindrische oder kreiszylindrische Bauform nicht über die gesamte Länge der Aufnahmeeinheit erstrecken muss, sondern lediglich ein bestimmter oder vorgegebener Abschnitt diese Form aufweist. Insbesondere weist dieser Abschnitt eine Länge auf, die 50%, bevorzugt 60% und weiter bevorzugt 70% der Gesamtlänge in Erstreckungsrichtung der Aufnahmeeinheit entspricht.

Gemäß einer weiteren Ausführungsform der vorliegenden Erfindung weist die Aufnahmeeinheit ein Adapterteil mit einem ersten Anschlussmittel zum fluidtechnischen Verbinden, insbesondere durch Verrasten, des Wassertanks in einer Betriebsstellung einerseits und einem zweiten Anschlussmittel zum Koppeln mit der Verdampfereinheit andererseits auf. Dadurch kann eine einfache und sichere Kopplung zwischen dem Wassertank und der Verdampfereinheit sowie des Wassertanks in der Aufnahmeeinheit realisiert werden. Das erste Anschlussmittel kann dabei insbesondere durch eine Rastfeder oder ein Rastelement gebildet werden, dass mit einem am Grundkörper des Wassertanks gebildeten Rastabschnitt oder Rastvorsprung im vollständig eingeschobenen Zustand des Wassertanks verrastet wird. Das zweite Anschlussmittel kann insbesondere ein Andock- oder Anschlussstutzen sein, an welchem beispielsweise ein Schlauch oder eine Leitung einer Wasserzuführungseinheit zur Kopplung mit der Verdampfereinheit angebracht ist. Mittels einer an der Aufnahmeeinheit angebrachten Sicherungsfeder kann das Adapterteil an der Aufnahmeeinheit fixiert werden.

Gemäß noch einer weiteren Ausführungsform weist das Adapterteil ein Sicherungsteil mit dem ersten Anschlussmittel und ein Verbindungsteil mit dem zweiten Anschlussmittel auf, wobei das Verbindungsteil und und das Sicherungsteil durch zwei separate Bauteile gebildet sein können. Durch diese zweiteilige Ausführung kann beispielsweise die Anordnung von zusätzlichen Komponenten, wie beispielsweise eine zwischen dem Sicherungsteil und dem Verbindungsteil angeordnete und austauschbare Dichtung/Gummidichtung, vorgesehen werden. Das Sicherungsteil kann beispielsweise an einem ersten Endabschnitt das erste Anschlussmittel in Form von Rastlaschen/Rasthaken oder dergleichen aufweisen und an dem zweiten Endabschnitt, der dem ersten Endabschnitt gegenüberliegt, ein Koppelelement zum KoppeinNerbinden mit dem Verbindungsteil in Form von Rastvorsprüngen, Rastlaschen oder dergleichen aufweisen. Das Verbindungsteil, das eingerichtet ist, um den Wassertank mit der Verdampfereinheit über eine Wasserzuführungseinheit zu koppeln, kann an einem ersten Endabschnitt das zweite Anschlusselement in Form eines Andockstutzens oder dergleichen aufweisen und an dem zweiten Endabschnitt, der dem ersten Endabschnitt gegenüberliegt, ebenfalls ein Koppelelement, das mit dem Koppelelement des Sicherungsteils in Eingriff gebracht werden kann oder mit diesem verrastbar ist, in Form von Rastvorsprüngen oder dergleichen aufweisen.

Vorzugsweise ist das Adapterteil in einem in der Aufnahmeeinheit gebildeten Lagerabschnitt im Wesentlichen in einer Betätigungsrichtung des Wassertanks verschiebbar gelagert, wodurch beispielsweise ein Mechanismus zum Ein- und Ausführen des Wassertanks realisiert werden kann. Das Ein- und Ausführen kann sowohl manuell als auch in Form eines Elektromotors vorgesehen werden. Im Falle des Elektromotors könnte dann beispielsweise eine Taste in der Bedienblende vorgesehen werden, um das Ein- und/oder Ausführen des Wassertanks zu starten. Die Betätigungsrichtung des Wassertanks entspricht der Richtung, in die der Wassertank in die Aufnahmeeinheit eingeführt und daraus entnommen werden kann.

Es ist besonders bevorzugt, wenn das Adapterteil eine Kulisse aufweist und durch eine Feder im Wesentlichen in der Betätigungsrichtung federkraftbeaufschlagt ist, wobei in die Kulisse ein Kulissenstein eingreift, der in einer Halteklammer geführt ist. Dadurch kann in einfacher Weise eine Einheit/Anordnung zum Ein- und/oder Ausführen des Wassertanks realisiert werden. Es versteht sich für den Durchschnittsfachmann, dass die Kulisse ebenfalls in dem Sicherungsteil oder dem Verbindungsteil gebildet werden kann. Insbesondere ist eine sogenannte Herzkurve als Kulisse vorgesehen. Das Vorsehen einer Feder/Druckfeder, die das Adapterteil mit einer Federkraft beaufschlagt, weist den Vorteil auf, dass die Einheit/Anordnung und somit der Wassertank in fest definierte Positionen bringbar ist und sich keine Zwischenstellungen ergeben können. Die Feder kann sich gemäß einer Weiterbildung an einer Sicherungsfeder oder einem Sicherungsbügel abstützen, die bzw. der an der Aufnahmeeinheit, bevorzugt an der unteren Gehäuseschale, angeordnet ist. Der Kulissenstein wird vorzugsweise in einem Längsschlitz der Halteklammer geführt, die bevorzugt an der unteren Gehäuseschale angeordnet ist. Der Längsschlitz verläuft im Wesentlichen senkrecht zu einer Haupterstreckungsrichtung des Wassertanks beziehungsweise zu der zuvor erwähnten Betätigungsrichtung desselben.

Gemäß einer Ausführungsform der Erfindung ist der Wassertank mittels einer Push-Push-Einheit aus dem Dampfgargerät entnehmbar ist. Es kann jedoch alternativ dazu auch jedes andere Prinzip verwendet werden, das zum Ein- und Ausführen des Wassertanks geeignet ist. Beispielsweise kann auch eine Entriegelungsmechanik vorgesehen sein, die beispielsweise durch eine an der Bedienblende angebrachte Entriegelungstaste betätigt wird. In diesem Fall würde eine Betätigung der Taste zu einem zumindest teilweisen Auswurf des Wassertanks führen. Die Verriegelung in der Aufnahmeeinheit könnte dann zum Beispiel durch Einführen und Verrasten desselben durch den Benutzer realisiert werden.

Bei Verwenden einer Push-Push-Einheit kann es in uneingeschränkter Weise drei wesentliche Zustände geben. Erstens einen eingefahrenen Zustand, der einem Betriebszustand des Wassertanks entspricht, in welchem der Wassertank vollständig angedockt ist, so dass Wasser aus dem Wassertank in Richtung der Verdampfereinheit ausgetragen werden kann. In diesem Zustand ist die Vorderseite des Wassertanks im Wesentlichen bündig mit der Frontfläche der Bedienblende. Ein zweiter Zustand kann einem überdrückten Zustand nach Betätigung der Push-Push-Einheit entsprechen.

Hierbei wird auf die Vorderseite des Wassertanks gedrückt, bis der Wassertank eine Endposition aufgrund des in der Kulisse geführten Kulissensteines erreicht. In diesem überdrückten Zustand befindet sich die Vorderseite in Bezug auf die Frontfläche zurückversetzt. Der Versatz nach hinten, also in Einführrichtung des Wassertanks, kann beispielsweise ungefähr 3 mm betragen. Ein dritter Zustand kann einem ausgefahrenen Zustand des Wassertanks entsprechen. Der ausgefahrene Zustand wird erreicht nach Wegnehmen der durch das Drücken erzeugten Kraft auf die Vorderseite des Wassertanks, bis der Wassertank eine weitere Endposition aufgrund des in der Kulisse in Eingriff stehenden Kulissensteins erreicht. In diesem ausgefahren Zustand ragt die Vorderseite des Wassertanks in Bezug auf die Frontfläche der Bedienblende in Richtung eines Benutzers vor. Der entsprechende Versatz nach vorne kann ungefähr 18 mm betragen, so dass ein ausreichend großer Bereich zum Anfassen und Herausnehmen des Wassertanks vorhanden ist.

Das erfindungsgemäße Dampfgargerät weist eine einfache Wasserversorgungseinheit mit einem leicht zu befüllenden Wassertank auf und ist somit weniger störungsanfällig als die aus dem Stand der Technik bekannten Geräte. Weiterhin wird durch die spezielle Ausgestaltung des vollständig entnehmbaren Wassertanks der Befüllvorgang vereinfacht, da der Wassertank mit Hilfe eines normalen Wasserhahns befüllt werden kann. Nach einem Befüllvorgang kann der Wassertank durch das Verschlusselement verschlossen werden und in die am Dampfgargerät vorgesehene Aufnahmeeinheit eingeführt werden. Hierbei ist es ebenfalls vorstellbar, dass an dem Wassertank und/oder der Aufnahmeeinheit eine Verdrehsicherung vorgesehen ist.

### Kurzbeschreibung der Zeichnungen

Die obigen und weiteren Merkmale der vorliegenden Erfindung werden nun mit Bezug auf bestimmte Ausführungsbeispiele davon ausführlich beschrieben, welche durch die beigefügten Zeichnungen dargestellt sind, und welche im Folgenden nur zur Veranschaulichung dienen, und somit nicht für die vorliegende Erfindung einschränkend sind. in der Zeichnung zeigen:
- Fig. 1: eine perspektivische Ansicht, die ein Haushaltsgerät in Form eines Dampfgargeräts gemäß einem ersten Ausführungsbeispiel der vorliegenden Erfindung schematisch darstellt;
- Fig. 2: eine perspektivische Ansicht, die einen Ausschnitt des Dampfgargeräts von Fig. 1 ohne ein oberes Gehäuseteil schematisch darstellt;
- Fig. 3: eine schematische Explosionsdarstellung von einzelnen Komponenten des Dampfgargeräts gemäß dem Ausführungsbeispiel der vorliegenden Erfindung;
- Fig. 4: eine perspektivische Ansicht, die einen Teil der in Fig. 3 dargestellten Komponenten in einem montierten Zustand schematisch darstellt;
- Fig. 5: eine schematische Explosionsdarstellung eines Verschlusselements eines Dampfgargeräts gemäß einem zweiten Ausführungsbeispiel der vorliegenden Erfindung;
- Fig. 6: eine schematische Schnittdarstellung entlang der Schnittebene IV-IV aus Fig. 5, wobei das Verschlusselement an einem Grundkörper des Wassertanks montiert ist.

Es ist zu beachten, dass die beigefügten Zeichnungen nicht notwendigerweise maßstabgerecht sind und eine etwas vereinfachte Darstellung von verschiedenen bevorzugten Merkmalen darstellen, die der Veranschaulichung der Grundsätze der Erfindung dienen. Die spezifischen Konstruktionsmerkmale der vorliegenden Erfindung, wie sie hierin offenbart sind, einschließlich z.B. spezifischer Abmessungen, Orientierungen, Einbauorte und Formen werden zum Teil durch die eigens dafür vorgesehene Anmeldung und die Arbeitsumgebung bestimmt.

In den Figuren werden gleiche oder funktionsgleiche Elemente mit den gleichen Bezugszeichen versehen.

### Ausführliche Beschreibung der Figuren

Ausführungsbeispiele der vorliegenden Erfindung werden im Folgenden unter Bezugnahme auf die beigefügten Zeichnungen ausführlich beschrieben.

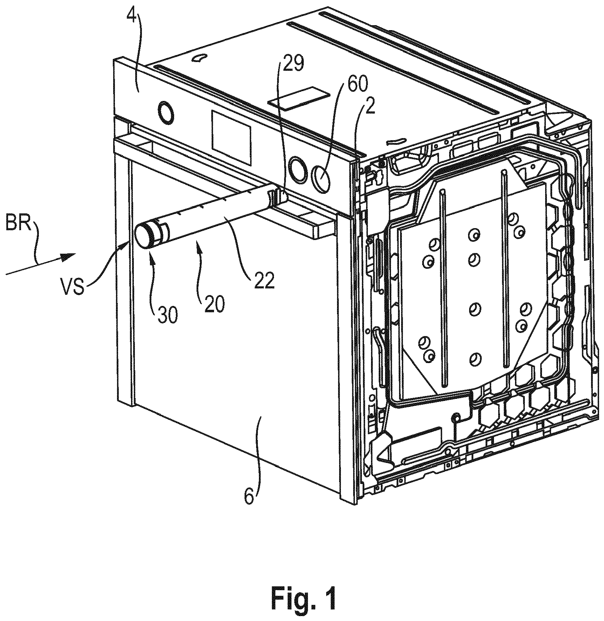

In Fig. 1 ist in einer vereinfachten schematischen Darstellung eine perspektivische Ansicht eines Haushaltsgeräts in Form eines Dampfgargeräts gemäß einem ersten Ausführungsbeispiel der vorliegenden Erfindung dargestellt. Das Dampfgargerät weist einen hinter einer Tür 6 befindlichen Garraum (nicht gezeigt), in welchen Gargut eingebracht werden kann, auf. Ein in den Garraum eingebrachtes Lebensmittel wird im Betrieb des Dampfgargeräts durch in den Garraum eingebrachten Wasserdampf gegart. Der Wasserdampf wird durch eine Verdampfereinheit (nicht gezeigt) erzeugt.

Das Dampfgargerät weist eine an einem Blendenträger 2 angebrachte Bedienblende 4 auf, die oberhalb der Tür 6 angeordnet ist. In einem rechten Bereich der Bedienblende 4 kann ein Wassertank 20 in eine Aufnahmeeinheit 60 zur Kopplung mit der Verdampfereinheit eingeführt werden. Der Wassertank 20 weist einen Grundkörper 22 auf, der durch ein Verschlusselement 30 im gezeigten Zustand verschlossen ist. Der Grundkörper 22 weist eine länglich kreiszylindrische Form auf. An einem dem Dampfgargerät zugewandten Endabschnitt des Grundkörpers 22 ist eine Auslassöffnung 29 gebildet. Der Wassertank 20 kann in der Betätigungsrichtung BR in die Aufnahmeeinheit 60 zum Erreichen einer Betriebsstellung zerstörungsfrei und reversibel eingesetzt und entnommen werden. Das zur Verdampfung vorgesehene flüssige Medium in Form von Wasser ist in dem Wassertank 20 bevorratet.

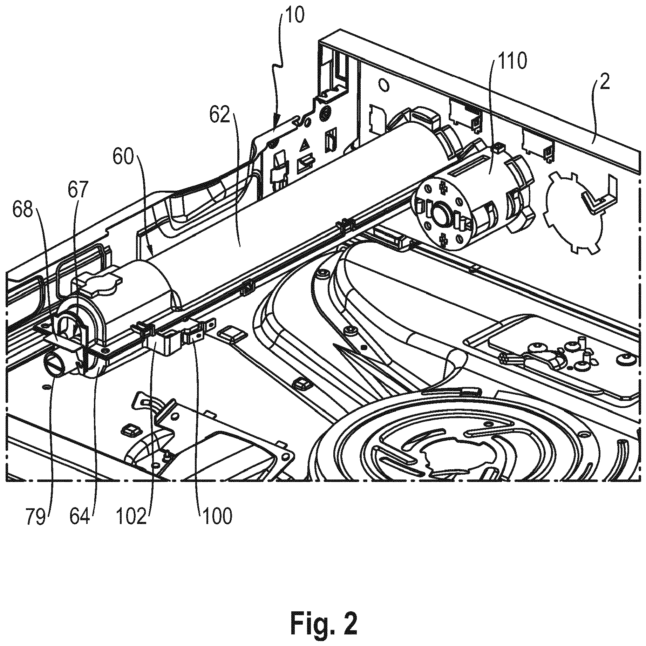

Fig. 2 zeigt eine perspektivische Ansicht, die einen Ausschnitt des Dampfgargeräts von Fig. 1 ohne ein oberes Gehäuseteil des Dampfgargeräts schematisch darstellt. An dem Blendenträger 2 ist eine zweiteilige Aufnahmeeinheit 60 einer Wasserversorgungseinheit 10 rückseitig an einer in dem Blendenträger 2 gebildeten Aussparung angebracht. Es ist gut erkennbar, dass eine Anbindung der Aufnahmeeinheit 60 an dem Blendenträger 2 einer Anbindung eines Knebeltopfes 110 entspricht, weshalb in dem Blendenträger 2 lediglich eine Art von Aussparungen für die Aufnahmeeinheit 60 und den Knebeltopf 110 vorgesehen ist.

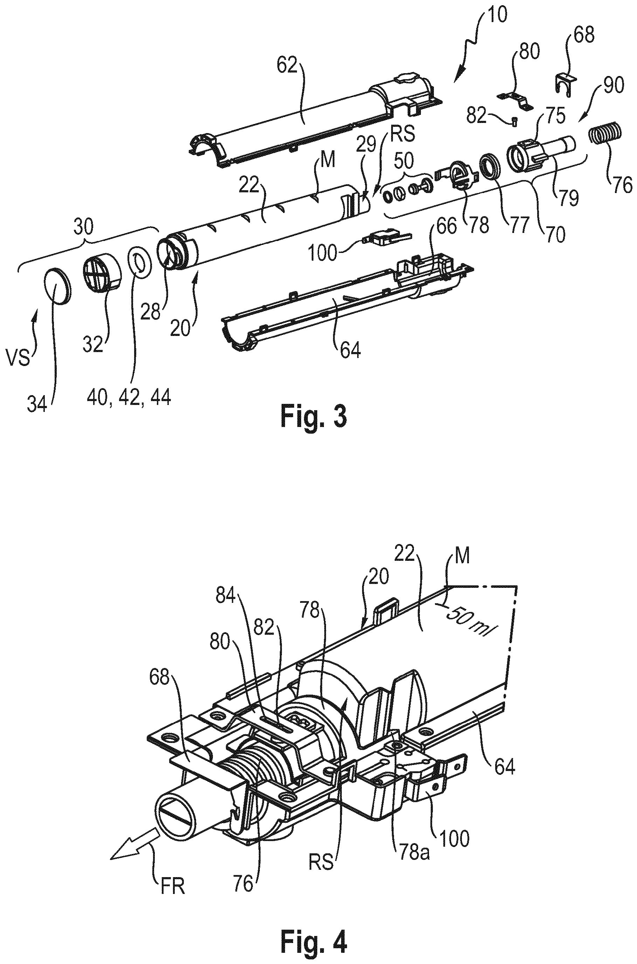

Die Aufnahmeeinheit 60 ist aus einem oberen Gehäuseteil 62 und einem unteren Gehäuseteil 64 gebildet. Im montierten Zustand, in dem das obere Gehäuseteil 62 und das untere Gehäuseteil 64 aneinander befestigt sind, weist die Aufnahmeeinheit 60 an einem hinteren Endbereich in Bezug auf den Blendenträger 2 einen Lagerabschnitt (66 in FIG. 3) auf, der in einer von dem Blendenträger 2 abgewandten Richtung offen ist. In der Öffnung 67 des Lagerabschnitts 66 ist ein Verbindungsteil 79 erkennbar, das einen Teil einer Anordnung zum Koppeln des Wassertanks (nicht gezeigt) mit der Verdampfereinheit (nicht gezeigt) bildet. An der Öffnung 67 ist eine Sicherungsfeder 68 befestigt, an welcher sich das Verbindungsteil 79 über eine Druckfeder (nicht gezeigt) abstützt. An einem an der Gehäuseaußenwand der Aufnahmeeinheit 60 angebrachten Montageabschnitt 102 ist im Bereich des Lagerabschnitts 66 ein Mikroschalter 100 vorgesehen, um eine Betriebsposition des Wassertanks zu erkennen.

Fig. 3 zeigt eine schematische Explosionsdarstellung von einzelnen Komponenten der Wasserversorgungseinheit 10 des Dampfgargeräts gemäß dem ersten Ausführungsbeispiel der vorliegenden Erfindung. Im Einzelnen sind das Verschlusselement 30, der Grundkörper 22 des Wassertanks 20, eine in einer Auslassöffnung 29 des Grundkörpers 22 angeordnete Ventileinheit 50, die aus dem oberen Gehäuseteil 62 und dem unteren Gehäuseteil 64 gebildete Aufnahmeeinheit 60 und ein Adapterteil 70 sowie weitere Komponenten zur Befestigung und/oder Sicherung dieser Bestandteile dargestellt. In dem gezeigten Ausführungsbeispiel umfasst das Verschlusselement 30 einen Verschlussdeckel 32 und eine daran frontseitig angebrachten Abdeckkappe 34. In den Verschlussdeckel 32 ist eine Gummidichtung 42 einlegbar, so dass der Grundkörper 22 durch den Verschlussdeckel 32 dicht verschlossen werden kann. Im gezeigten Beispiel ist der Verschlussdeckel 32 mittels eines Bajonettverschlusses an dem Grundkörper 22 befestigbar.

An dem Grundkörper 22 befindet sich eine Mehrzahl von Markierungen M, mit denen die Wassermenge beim Befüllen des Wassertanks 20 abgelesen werden kann. An einem dem Verschlusselement 30 gegenüberliegenden Endabschnitt ist an dem Grundkörper 22 des Wassertanks 20 eine Auslassöffnung 29 gebildet, in der die Ventileinheit 50 angeordnet ist. Die Ventileinheit 50 ist als Aufstoßventil ausgeführt.

Wie aus Fig. 3 ersichtlich ist, ist das Adapterteil 70 aus einem Sicherungsteil 78, einem Verbindungsteil 79 und einem dazwischen angeordneten Dichtungsteil 77 gebildet. Das Sicherungsteil 78 weist an seinem dem Wassertank 20 zugewandten Abschnitt als erstes Anschlussmittel zwei Rastelemente in Form von Rastlaschen auf, die mit korrespondierenden Rastelementen des Wassertanks 20 beziehungsweise des Grundkörpers 22 in Eingriff gebracht werden können. An dem anderen Abschnitt des Sicherungsteils 78, der dem Verbindungsteil 79 zugewandt ist, befinden sich ebenfalls zwei Verbindungselemente, mit Hilfe derer das Sicherungsteil 78 an dem Verbindungsteil 79 befestigbar ist. Hierzu sind an dem Verbindungsteil 79 an einem dem Sicherungsteil 78 zugewandten ersten Abschnitt korrespondierende Verbindungselemente vorgesehen. An dem dem ersten Abschnitt gegenüberliegenden zweiten Abschnitt des Verbindungsteils 79 ist als zweites Anschlussmittel zur Kopplung mit der Verdampfereinheit ein Anschlussstutzen gebildet.

Im montierten Zustand ist eine an einer Sicherungsfeder 68 abgestützte Druckfeder 76 vorgesehen, um das Adapterteil 70 mit einer Federkraft in Richtung des Wassertanks 20 zu beaufschlagen. An einem Abschnitt des Verbindungsteils 79 ist eine Kulisse in Form einer Herzkurve gebildet, in der ein Kulissenstein 82 in Eingriff gebracht werden kann. Der Kulissenstein 82 wird in einer Halteklammer 80 geführt.

Fig. 4 zeigt eine perspektivische Ansicht, die einen Teil der in Fig. 3 dargestellten Komponenten in einem montierten Zustand schematisch darstellt. Aus Fig. 4 ist das durch das Sicherungsteil 78 und das Verbindungsteil 79 gebildete Adapterteil 70 gut erkennbar. Weiterhin ist ersichtlich, dass an der Halteklammer 80 ein Längsschlitz 84 gebildet ist, in dem der Kulissenstein 82 geführt wird. Fig. 4 zeigt den Betriebszustand, in dem der Wassertank 20 vollständig in seiner Endposition mit dem Sicherungsteil 78 verrastet ist und somit das im Tank bevorratete Wasser durch das geöffnete Aufstoßventil in einer Flussrichtung FR an die Verdampfereinheit zugeführt werden kann. Weiterhin ist aus Fig. 4 ersichtlich, dass ein an dem Sicherungsteil 78 gebildeter Rasthaken 78a mit einem an dem Grundkörper 22 des Wassertanks 20 gebildeten Rastvorsprung in Eingriff steht, so dass der Wassertank 20 in Kombination mit der auf den Wassertank 20 durch die Druckfeder 76 erzeugten Federkraft stabil in seiner Betriebsposition gehalten wird.

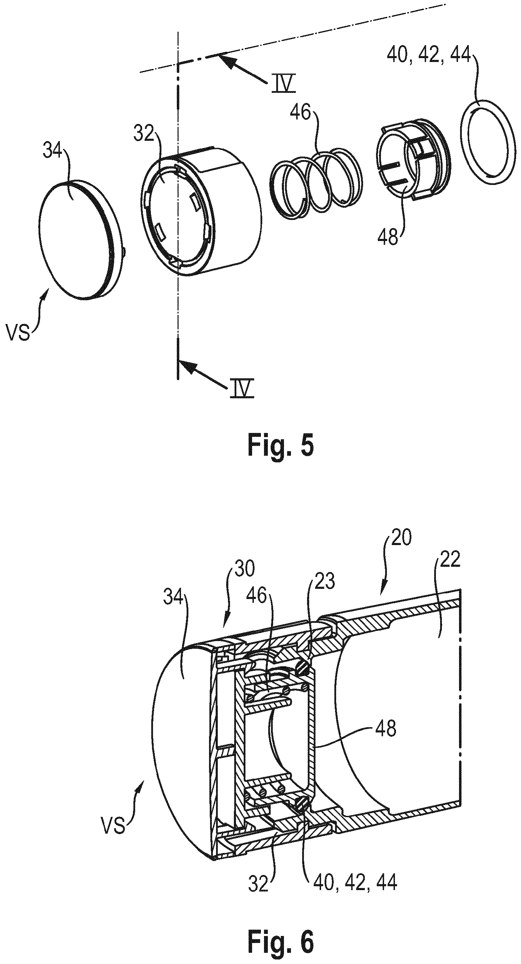

Fig. 5 zeigt eine schematische Explosionsdarstellung eines Verschlusselements eines Dampfgargeräts gemäß einem zweiten Ausführungsbeispiel der vorliegenden Erfindung. Im Gegensatz zum ersten Ausführungsbeispiel ist das Verschlusselement 30 aus einem Verschlussdeckel 32, einer an dem Verschlussdeckel 32 frontseitig angebrachten Abdeckkappe 34, einem Dichtungsträger 48 mit einem darauf montierten O-Ring 44 und einer zwischen dem Dichtungsträger 48 und dem Verschlussdeckel 32 angeordneten Feder 46 gebildet. Der 0-Ring 44 ist an dem Dichtungsträger 48 umfangsseitig an einem dem Verschlussdeckel 32 abgewandten Endabschnitt angebracht. Der Dichtungsträger 48 weist an dem Verschlussdeckel 32 zugewandten Abschnitt eine Mehrzahl von Rastelementen auf, mit denen der Dichtungsträger 48 an dem Verschlussdeckel 32, mit der dazwischen liegenden Feder 46, befestigt wird. Die Feder 46 ist als Druckfeder ausgeführt, so dass sie sich einerseits an dem Verschlussdeckel 32 abstützt und andererseits den Dichtungsträger 48 mit einer Federkraft beaufschlagt.

Fig. 6 eine schematische Schnittdarstellung entlang der Schnittebene IV-IV aus Fig. 5, wobei das Verschlusselement an einem Grundkörper des Wassertanks montiert ist. Wie aus Fig. 6 ersichtlich ist, wird in dem Zustand, in dem das Verschlusselement 30 mit dem Grundkörper 22 des Wassertanks 20 verschraubt ist, die 0-Ring-Dichtung 44 durch die von der Feder 46 erzeugte Federkraft gegen die am Grundkörper 22 gebildete Dichtkante 23 gedrückt. Die Dichtkante 23 ist umfangsseitig im Innenraum des Grundkörpers 22 gebildet. Weiterhin ist in Fig. 6 erkennbar, dass der Grundkörper 22 des Wassertanks 20 an seinem dem Verschlusselement 30 zugewandten Endabschnitt einen Durchmesser aufweist, der kleiner als der Durchmesser außerhalb des Endabschnitts ist. Der Außendurchmesser des Verschlusselements 30 entspricht im Wesentlichen dem Außendurchmesser des Grundkörpers 22 des Wassertanks 20. Der Innendurchmesser des Verschlusselements 30 entspricht im Wesentlichen dem Außendurchmesser des dem Verschlusselement 30 zugewandten Endabschnitts des Grundkörpers 22.

### BEZUGSZEICHENLISTE

- 2: Blendenträger
- 4: Blende
- 6: Tür
- 10: Wasserversorgungseinheit
- 20: Wassertank
- 22: Grundkörper
- 23: Dichtkante
- 24: Vorderseite
- 26: Rückseite
- 28: Befüllöffnung
- 29: Auslassöffnung
- 30: Verschlusselement
- 32: Verschlussdeckel
- 34: Abdeckkappe
- 40: Dichtung
- 42: Gummidichtung
- 44: 0-Ring
- 46: Feder
- 48: Dichtungsträger
- 50: Ventileinheit
- 60: Aufnahmeeinheit
- 62: oberes Gehäuseteil
- 64: unteres Gehäuseteil
- 66: Lagerabschnitt
- 67: Öffnung
- 68: Sicherungsfeder
- 70: Adapterteil
- 75: Kulisse
- 76: Druckfeder
- 77: Dichtungsteil
- 78: Sicherungsteil
- 78a: Rasthaken
- 79: Verbindungsteil
- 80: Halteklammer
- 82: Kulissenstein
- 84: Längsschlitz
- 90: Push-Puii-Einheit
- 100: Mikroschalter
- 102: Montageabschnitt
- 110: Knebeltopf
- BR: Betätigungsrichtung
- FR: Flussrichtung
- M: Markierung
- VS: Vorderseite
- RS: Rückseite

## Patentansprüche

1. Dampfgargerät mit einer Wasserversorgungseinheit (10), die einen entnehmbaren Wassertank (20) aufweist, der in Einbaulage eine einem Benutzer zugewandte Vorderseite (VS) und eine der Vorderseite (VS) gegenüberliegende Rückseite (RS) aufweist, und einer mit der Wasserversorgungseinheit (10) verbindbaren Verdampfereinheit, mit welcher Wasser der Wasserversorgungseinheit (10) verdampfbar ist und der in der Verdampfereinheit erzeugte Dampf in den Garraum des Dampfgargeräts bereitstellbar ist, **dadurch gekennzeichnet, dass** der Wassertank ein Verschlusselement (30) zum Verschließen seiner Befüllöffnung (28) zum Befüllen mit Wasser aufweist, wobei das Verschlusselement (30) zumindest abschnittsweise die Vorderseite (VS) oder die Rückseite (RS) des Wassertanks (20) bildet.

2. Dampfgargerät nach Anspruch 1, **dadurch gekennzeichnet, dass** das Verschlusselement (30) durch einen Bajonett- oder Schraubverschluss an einem Grundkörper (22) des Wassertanks (20) befestigbar bzw. befestigt ist.

3. Dampfgargerät nach Anspruch 1 oder 2, **dadurch gekennzeichnet, dass** ein Grundkörper (22) des Wassertanks (20) eine im Wesentlichen längliche, vorzugsweise zylindrische, weiter vorzugsweise kreiszylindrische, Bauform aufweist.

4. Dampfgargerät nach einem der vorhergehenden Ansprüche, **dadurch gekennzeichnet, dass** das Verschlusselement (30) und/oder der Grundkörper an einem Verbindungsabschnitt eine Dichtung (40), insbesondere eine Gummidichtung (42), aufweist.

5. Dampfgargerät nach Anspruch 4, **dadurch gekennzeichnet, dass** die Gummidichtung (42) als 0-Ring (44) ausgebildet ist, der in einer Schließstellung des Verschlusselements (30) durch eine Feder (46) gegen eine Dichtkante (23) des Grundkörpers (22) gedrückt ist.

6. Dampfgargerät nach Anspruch 5, **dadurch gekennzeichnet, dass** der 0-Ring (44) auf einem Dichtungsträger (48), insbesondere topfförmigen Dichtungsträger, angeordnet ist und dass die Feder (46) zwischen einem Verschlussdeckel (32) des Verschlusselements (30) und dem Dichtungsträger (48) angeordnet ist.

7. Dampfgargerät nach einem der vorhergehenden Ansprüche, **dadurch gekennzeichnet, dass** das Verschlusselement (30) eine Abdeckkappe (34) aufweist, die zumindest abschnittsweise die Vorderseite (VS) des Wassertanks (20) bildet.

8. Dampfgargerät nach einem der vorhergehenden Ansprüche, **dadurch gekennzeichnet, dass** der Wassertank (20) zur Kopplung mit der Verdampfereinheit eine Ventileinheit (50) aufweist.

9. Dampfgargerät nach einem der vorhergehenden Ansprüche, **dadurch gekennzeichnet, dass** die Wasserversorgungseinheit (10) eine Aufnahmeeinheit (60) zur Aufnahme des Wassertanks (20) aufweist, wobei die Aufnahmeeinheit insbesondere an einem Blendenträger (2) des Dampfgargeräts angebracht oder angeordnet ist.

10. Dampfgargerät nach Anspruch 9, **dadurch gekennzeichnet, dass** die Aufnahmeeinheit (60) eine im Wesentlichen längliche, vorzugsweise zylindrische, weiter vorzugsweise kreiszylindrische Bauform aufweist.

11. Dampfgargerät nach Anspruch 9 oder 10, **dadurch gekennzeichnet, dass** die Aufnahmeeinheit (60) ein Adapterteil (70) mit einem ersten Anschlussmittel zum fluidtechnischen Koppeln, insbesondere durch Verrasten, des Wassertanks (20) in einer Betriebsstellung einerseits und einem zweiten Anschlussmittel zum Koppeln mit der Verdampfereinheit andererseits aufweist.

12. Dampfgargerät nach Anspruch 11, **dadurch gekennzeichnet, dass** das Adapterteil (70) ein Sicherungsteil (78) als erstes Anschlussmittel und ein Verbindungsteil (79) als zweites Anschlussmittel aufweist.

13. Dampfgargerät nach Anspruch 11 oder 12, **dadurch gekennzeichnet, dass** das Adapterteil (70) in einem in der Aufnahmeeinheit (60) gebildeten Lagerabschnitt (66) im Wesentlichen in einer Betätigungsrichtung (BR) des Wassertanks (20) verschiebbar gelagert ist.

14. Dampfgargerät nach Anspruch 13, **dadurch gekennzeichnet, dass** das Adapterteil (70) eine Kulisse (75) aufweist und durch eine Feder (76) im Wesentlichen in der Betätigungsrichtung (BR) federkraftbeaufschlagt ist, wobei in die Kulisse (75) ein Kulissenstein (82) eingreift, der in einer Halteklammer (80) geführt ist.

15. Dampfgargerät nach einem der vorhergehenden Ansprüche, **dadurch gekennzeichnet, dass** der Wassertank (20) mittels einer Push-Push-Einheit (90) aus dem Dampfgargerät entnehmbar ist.

## Claims

1. Steam cooking appliance comprising a water supply unit (10) which has a removable water tank (20) which in the installed position has a front side (VS) facing a user and a rear side (RS) opposite the front side (VS), and an evaporator unit which can be connected to the water supply unit (10) and by means of which water from the water supply unit (10) can be evaporated and the steam generated in the evaporator unit can be provided into the cooking chamber of the steam cooking appliance, **characterised in that** the water tank has a closure element (30) for closing its filling opening (28), wherein the closure element (30) at least in part forms the front side (VS) or the rear side (RS) of the water tank (20).

2. Steam cooking appliance according to claim 1, **characterised in that** the closure element (30) can be fastened or is fastened to a main body (22) of the water tank (20) by means of a bayonet or screw closure.

3. Steam cooking appliance according to claim 1 or 2, **characterised in that** a main body (22) of the water tank (20) has an essentially elongated, preferably cylindrical, more preferably circular-cylindrical design.

4. Steam cooking appliance according to one of the preceding claims, **characterised in that** the closure element (30) and/or the main body has a seal (40), in particular a rubber seal (42), on a connecting section.

5. Steam cooking appliance according to claim 4, **characterised in that** the rubber seal (42) is designed as an O-ring (44) which, in a closed position of the closure element (30), is pressed by a spring (46) against a sealing edge (23) of the main body (22).

6. Steam cooking appliance according to claim 5, **characterised in that** the O-ring (44) is arranged on a seal support (48), in particular a pot-shaped seal support, and **in that** the spring (46) is arranged between a closure cover (32) of the closure element (30) and the seal support (48).

7. Steam cooking appliance according to one of the preceding claims, **characterised in that** the closure element (30) has a cover cap (34) which at least in part forms the front side (VS) of the water tank (20).

8. Steam cooking appliance according to one of the preceding claims, **characterised in that** the water tank (20) has a valve unit (50) for coupling to the evaporator unit.

9. Steam cooking appliance according to one of the preceding claims, **characterised in that** the water supply unit (10) has a receiving unit (60) for receiving the water tank (20), wherein the receiving unit is attached or arranged, in particular, to a panel support (2) of the steam cooking appliance.

10. Steam cooking appliance according to claim 9, **characterised in that** the receiving unit (60) has an essentially elongated, preferably cylindrical, more preferably circular-cylindrical design.

11. Steam cooking appliance according to claim 9 or 10, **characterised in that** the receiving unit (60) has an adapter part (70) with a first connecting means for fluidic coupling, in particular by latching, of the water tank (20) in an operating position on the one hand and a second connecting means for coupling to the evaporator unit on the other hand.

12. Steam cooking appliance according to claim 11, **characterised in that** the adapter part (70) has a securing part (78) as a first connecting means and a connecting part (79) as a second connecting means.

13. Steam cooking appliance according to claim 11 or 12, **characterised in that** the adapter part (70) is mounted so as to be displaceable in a bearing section (66) formed in the receiving unit (60) essentially in an actuating direction (BR) of the water tank (20).

14. Steam cooking appliance according to claim 13, **characterised in that** the adapter part (70) has a slotted guide (75) and spring force is applied essentially in the actuating direction (BR) by a spring (76), wherein a sliding block (82), which is guided in a retaining clip (80), engages in the slotted guide (75).

15. Steam cooking appliance according to one of the preceding claims, **characterised in that** the water tank (20) can be removed from the steam cooking appliance by means of a push-push unit (90).

## Revendications

1. Appareil de cuisson à la vapeur comprenant une unité d'alimentation en eau (10), qui comprend un réservoir d'eau amovible (20), qui, en position de montage, présente une face avant (VS) orientée vers un utilisateur et une face arrière (RS) opposée à la face avant (VS), et une unité d'évaporation pouvant être reliée à l'unité d'alimentation en eau (10), avec laquelle de l'eau de l'unité d'alimentation en eau (10) peut être évaporée et la vapeur produite dans l'unité d'évaporation peut être fournie dans l'enceinte de cuisson de l'appareil de cuisson à la vapeur,
**caractérisé en ce que** le réservoir d'eau comprend un élément de fermeture (30) servant à fermer son ouverture de remplissage (28) pour le remplir avec de l'eau, dans lequel l'élément de fermeture (30) forme au moins en partie la face avant (VS) ou la face arrière (RS) du réservoir d'eau (20).

2. Appareil de cuisson à la vapeur selon la revendication 1, **caractérisé en ce que** l'élément de fermeture (30) peut être fixé ou est fixé à un corps de base (22) du réservoir d'eau (20) par une fermeture à baïonnette ou à vis.

3. Appareil de cuisson à la vapeur selon la revendication 1 ou 2, **caractérisé en ce qu'**un corps de base (22) du réservoir d'eau (20) a une forme de construction essentiellement oblongue, de préférence cylindrique, de manière plus préférée cylindrique circulaire.

4. Appareil de cuisson à la vapeur selon l'une des revendications précédentes, **caractérisé en ce que** l'élément de fermeture (30) et/ou le corps de base comprend au niveau d'une partie de jonction un joint d'étanchéité (40), en particulier un joint d'étanchéité en caoutchouc (42).

5. Appareil de cuisson à la vapeur selon la revendication 4, **caractérisé en ce que** le joint d'étanchéité en caoutchouc (42) est réalisé sous forme d'un joint torique (44), qui est pressé, dans une position de fermeture de l'élément de fermeture (30), par un ressort (46) contre un bord d'étanchéité (23) du corps de base (22).

6. Appareil de cuisson à la vapeur selon la revendication 5, **caractérisé en ce que** le joint torique (44) est disposé sur un porte-joint (48), en particulier un porte-joint en forme de pot et **en ce que** le ressort (46) est disposé entre un couvercle de fermeture (32) de l'élément de fermeture (30) et le porte-joint (48).

7. Appareil de cuisson à la vapeur selon l'une des revendications précédentes, **caractérisé en ce que** l'élément de fermeture (30) comprend un capuchon de protection (34), qui forme au moins en partie la face avant (VS) du réservoir d'eau (20).

8. Appareil de cuisson à la vapeur selon l'une des revendications précédentes, **caractérisé en ce que** le réservoir d'eau (20) comprend un organe de soupape (50) pour le raccorder à l'unité d'évaporation.

9. Appareil de cuisson à la vapeur selon l'une des revendications précédentes, **caractérisé en ce que** l'unité d'alimentation en eau (10) comprend un ensemble de réceptacle (60) pour loger le réservoir d'eau (20), dans lequel l'ensemble de réceptacle est monté ou disposé en particulier sur un support de panneau (2) de l'appareil de cuisson à la vapeur.

10. Appareil de cuisson à la vapeur selon la revendication 9, **caractérisé en ce que** l'ensemble de réceptacle (60) a une forme de construction essentiellement oblongue, de préférence cylindrique, de manière plus préférée cylindrique circulaire.

11. Appareil de cuisson à la vapeur selon la revendication 9 ou 10, **caractérisé en ce que** l'ensemble de réceptacle (60) comprend une pièce d'adaptateur (70) comprenant un premier moyen de raccordement pour un couplage fluidique, en particulier par encliquetage, du réservoir d'eau (20) dans une position de service d'un côté et un deuxième moyen de raccordement pour un couplage avec l'unité d'évaporation de l'autre côté.

12. Appareil de cuisson à la vapeur selon la revendication 11, **caractérisé en ce que** la pièce d'adaptateur (70) comprend une pièce de blocage (78) à titre de premier moyen de raccordement et une pièce de connexion (79) à titre de deuxième moyen de raccordement.

13. Appareil de cuisson à la vapeur selon la revendication 11 ou 12, **caractérisé en ce que** la pièce d'adaptateur (70) est montée dans une section de support (66) formée dans l'ensemble de réceptacle (60) de façon à pouvoir être coulissée essentiellement dans une direction d'actionnement (BR) du réservoir d'eau (20).

14. Appareil de cuisson à la vapeur selon la revendication 13, **caractérisé en ce que** la pièce d'adaptateur (70) comprend une coulisse (75) et est soumise à la force d'un ressort par un ressort (76) essentiellement dans la direction d'actionnement (BR), dans lequel un coulisseau (82) s'engrène dans la coulisse (75), qui est guidé dans un étrier de retenue (80).

15. Appareil de cuisson à la vapeur selon l'une des revendications précédentes, **caractérisé en ce que** le réservoir d'eau (20) peut être détaché de l'appareil de cuisson à la vapeur au moyen d'un dispositif de type push-push (90).
